# EUROPEAN PATENT APPLICATION

(11) **EP 3 187 474 A1**
(43) Date of publication of application: **05.07.2017**
(21) Application number: 16206282.2
(22) Date of filing: 22.12.2016
(51) Int. Cl.: C04B 26/02, C04B 28/14, C04B 30/02, C04B 20/10

(54) **INSULATION PANEL**

(30) Priority: 29.12.2015 GB 201523032
(71) Applicant: Knauf Insulation SPRL, 4600 Visé (BE)
(72) Inventor: Gorazd, Sebenik, 1435 Mont-Saint-Guibert (BE); Smolej, Jure, 1435 Mont-Saint-Guibert (BE); Kese, Miha, 1435 Mont-Saint-Guibert (BE); Kejzar, Gregor, 1435 Mont-Saint-Guibert (BE); Vezocnik, Borut, 1435 Mont-Saint-Guibert (BE)
(74) Representative: Farmer, Guy Dominic

(57) **Abstract**

An insulation panel, particularly for fire-resistant doors, comprises mineral wool fibres and particles comprising calcium sulphate, notably having an average diameter of at least 5 mm.

## Description

This invention relates to a thermal and/or sound insulation panel in particular for providing high levels of flame and/or fire resistance, for examples for buildings, notably for doors, floors, walls, partitions, metal building structures or prefabricated building elements.

One known building insulation assembly comprises a plasterboard panel sandwiched between two rock wool boards. Although the plasterboard panel provide useful fire resistant properties, when subjected to fire conditions there is a risk of breakage of the plasterboard layer, notably due to mechanical stresses, leaving the mineral wool layer as the only integral layer. Increasing the thickness of the plasterboard layer in the hope of improving fire performance would lead to either an increase of the total thickness of the assembly or a decrease in thermal insulation performance if the same thickness of assembly is used.

According to one of its aspects, the present invention provides an insulation panel as defined in claim 1. Further aspects include a method of manufacturing an insulation panel and an insulation assembly as defined in other independent claims. The dependent claims define preferred or alternatives embodiments of the invention.

Panels according to the invention provide an advantageous combination of fire resistance, mechanical resistance and thermal insulation properties, without requiring excessive weight or excessive thickness.

The mineral wool fibres may be manmade vitreous fibres (MMVFs) and preferably comprise rock wool fibres; other mineral wool fibres, for example glass wool fibres, may be used in combination or instead of rock wool fibres. The mineral wool fibres may be milled. The average geometrical length of the fibres may be less than 20 mm, notably less than 10 mm; their average geometrical diameter may be less than 10µm, preferably less than 8µm, more preferably less than 7µm. Such dimensions facilitate mixing of the mineral wool fibres and the particles, notably when the particles are distributed between the mineral wool fibres, and provide desirable fire, thermal and mechanical properties.

The particles comprise or consist essentially of calcium sulphate, notably calcium sulphate hemihydrate CaS0₄·0.5H₂O and/or calcium sulphate dihydrate CaSO₄·2H₂O. Preferably, the particles comprise at least 50 wt%, more preferably at least 80 wt% calcium sulphate. The term "consist essentially of" is intended to limit the scope of a claim to the specified materials with possible additions that do not materially affect the basic and novel characteristic(s) of the claimed invention. The particles may comprise recycled materials, for example plaster, plasterboard or gypsum, preferably recycled fire-resistant plasterboard. The particles may comprise recycled materials from plaster boards of type GKB (DIN 18180) or A (EN 520) and/or which have a reaction to fire according to EN 13501-1 of at least A2-s1, d0 (B) EN 520. Preferably, the particles comprise recycled materials from plasterboards of type GKF (EN 15283-1) and/or which have a reaction to fire according to EN 13501-1 of A1. When recycled particles are used, these may comprise scrap materials from the manufacture of plaster, plaster products, gypsum or gypsum product and/or recycled boards, for example recycled plaster boards. The recycled plaster boards may be boards obtained from the production of plaster board, for example reject or scrap boards i.e. boards that have not been used. Such recycled plaster boards, including pieces of plaster board, may be used in a dry condition, for example when they comprise boards which have been passed through a curing or drying oven during manufacture of the plaster boards; they may be used in an undried condition, for example when they comprise boards which have not passed through a curing or drying oven. The recycled plaster boards may be boards that have been used, for example in a building, notably boards removed from a building or building site, for example during refurbishment or demolition of a building. The particles may be obtained and/or applied to the mineral fibres in wet form, for example in the form of a slurry comprising the particles. The slurry may be transformed to provide a powder, notably by drying and grinding, which is combined with mineral wool fibres to provide an insulation panel. Alternatively, mineral wool fibres may be combined with a slurry to provide an insulation panel; such a slurry may be a slurry in the form received as a waste product from manufacture of plasterboards or a slurry which has been modified, for example by dilution, by concentration, or by filtration or in respect of which its particle size has been changed to suit its combination with mineral wool to provide insulation panels. The particles may comprise fibres, notable mineral fibres, particular when obtained from fibre reinforced plasterboards. The particles may comprise additives and/or fillers. Preferably, the particles have a low organics content, notably ≤ 10% and preferably ≤ 5%, ≤ 1% or ≤ 0.5% by dry weight.

Particularly when sourced as recycled materials, the particles may be ground, milled, sieved, sorted or otherwise processed to provide their desired dimensions, notably an average geometrical diameter of at least 5 mm. The particles may have a median sieve size which is less than or equal to 15 mm, preferably less than or equal to 10 mm and more preferably less than or equal to 8 mm. Preferably, at least 80% by weight of the particles have a sieve size which is ≥ 5 mm and/or ≤ 15 mm, ≤ 10 mm or ≤ 8 mm. Such dimensions facilitate processing and mixing of the particles with the mineral wool fibres. For example, such a diameter distribution avoids a significant proportion of a) fine particles which would be difficult to mix, notably when dry, with the mineral wool and create dust in the manufacturing process and/or product and b) large particles which would i) create difficulties when cutting or grinding the product and ii) have a tendency to be displaced within the product when shaken. The term "sieve size" in relation to particles designates the size of the particles determined by passing a collection of particles through a series of sieves having progressively smaller opening sizes.

The particles may contain water of crystallisation and the quantity of water of crystallisation may be less than 30%, less than 20% and/or at least 10% by weight, preferably between 10 and 18% by weight of the particles.

The calcium sulphate comprising particles may be mixed with the mineral fibres by distributing the particles, for example in the form of a powder, through the mineral fibres notably in an air stream, for example by projecting the particles in the form of a powder towards a stream of fibres carried in a gas current, notably in a collecting chamber of a fiberizing apparatus between formation of the fibres by spinning and collection of the fibres as a mat, for example on a perforated drum or belt. The particles may be allowed to fall in to a stream of the fibres. The particles may be distributed by a particle distributor or particle sprayer, preferably an oscillating or rotating particle distributor; this facilitates a regular and even distribution of the particles. The particles may be mixed with the mineral fibres when carried by a liquid, notably in the form of a slurry, for example by projection or spraying of the slurry, preferably droplets of the slurry, onto fibres, notably fibres carried in a gas current, notably in a collecting chamber of a fiberizing apparatus between formation of the fibres by spinning and collection of the fibres as a mat, for example on a perforated drum or belt. In this case, the slurry or droplets of slurry are dried subsequent to mixing with the fibres, for example during passage through a curing or drying oven. Such drying preferably results in a plurality of discrete particles within the fibre structure, notably comprising particles that have penetrated the fibres and become embedded in the fibres. The use of such mixing techniques is particularly advantageous for existing manufacturing facilities as it may be retrofitted without significant modification to existing apparatus and/or in a way that allows its operation for some but not all products.

The insulation panel may comprise at least 40%, at least 50%, at least 55%, at least 60%, at least 65%, at least 70%, at least 75% or at least 80% and/or no more than 95% by weight of mineral wool fibres. This provides desirable thermal properties and/or a suitable structure for retaining the particles. The insulation panel may comprise at least 10% and/or less than 60%, less than 50%, less than 40%, less than 30% or less than 20% by weight of the calcium sulphate containing particles; this provides desirable fire and/or flame resistant properties.

The insulation panel may comprise a binder, notably an organic binder, which may make up at least 1% or at least 2% and/or no more than 8%, no more than 7% or no more than 6% by weight of the insulation panel. The quantity of binder may be determined by loss on ignition by comparing the weight of the panel prior to and subsequent to thermal decomposition of the binder. Preferably, the insulation panel comprises between 1% and 6% by weight of binder; this provides a suitable cohesion without prejudicing fire performance and/or flame resistance.

In a preferred embodiment, the insulation panel comprises a homogeneous mixture of mineral fibres and particles comprising calcium sulphate. As used herein, the term "homogeneous mixture" designates a panel in respect of which, when considering a cross-section through the panel, any difference in the percentage weight of particles in the core layer and in each surface layer of the panel is no greater than 15%, preferably no greater than 10% or no greater than 5%. In this respect, each surface layer is considered to consist of a layer having a thickness of one fifth of the total thickness of the insulation panel and the core layer is considered to be a centrally positioned layer having a thickness of one half of the total thickness of the insulation panel. A homogeneous mixture provides desired thermal, mechanical and fire resistant properties through the entire thickness of the insulation panel. The insulation panel may be provided with a plurality of differentiated bands at different positions along its length, each band preferably extending across the entire width of the panel. For example, the insulation panel may comprise an upper band positioned towards a top edge of the insulation panel which has different properties than at least one other band of the panel, notably a higher density. The insulation panel may also comprise a lower band positioned towards a lower edge of the insulation panel, notably having a similarly high density and a central band positioned centrally along the length of the panel having a lower density. Such higher density bands, notably positioned towards the top and/or bottom of the panel may improve the fire performance of these portions of the panel.

The insulation panel may comprise at least 50%, at least 60%, at least 70%, at least 80%, at least 90%, at least 95% by weight of a mixture of mineral fibres and particles comprising calcium sulphate with respect to the total weight of the insulation panel.

The % weight of the particles and mineral wool fibres in the insulation panel may be determined using X-ray diffraction, for example using a Rietveld refinement of X-ray diffraction patterns notably using refinement software such as Bruker AXS Topas version 2.1. A sample of the panel is ground and added to an internal standard for analysis by an X-ray diffractometer; the quantity of crystalline and amorphous phases can be determined through refinement of phases structural parameters.

The insulation panel may have a density of at least 100 kg/m³, at least 200 kg/m³ or at least 250 kg/m³; this provides good mechanical properties, notably compression strength. The insulation panel may have a density of no more than 300 kg/m³, no more than 400 kg/m³ or no more than 500 kg/m³; this avoid having a too heavy insulation panel and provides desirable thermal insulation properties.

The insulation panel may be used in a door, notably a fire-resistant door, for example as the core or the door; it may be used in a building for example in a wall, partition, floor or ceiling. The insulation panel may have a thickness which is: ≥ 10 mm, ≥ 15 mm, ≥ 20 mm or ≥ 25; and/or ≥ 300 mm, ≥ 200 mm or ≤ 100 mm.

The insulation panel may have a substantially rectangular or square shape. The length of the insulation panel may be at least 20cm, at least 30cm, at least 50cm, at least 75cm, at least 100cm, at least 150cm, at least 200cm, at least 250cm and/or no more 350 cm or no more than 300 cm. The width of the insulation panel may be at least 10cm, at least 20 cm or at least 50 cm and/or no more than 200 cm. The insulation panel may have a ratio of length:width comprised between 1:1 and 10:1. Preferably, the insulation panel is a single piece insulation panel having these dimensions, as opposed to two or more mineral panels juxtapositioned.

The insulation panel may be used in an insulation assembly, notably an insulation assembly comprising the insulation layer and a sheet of plasterboard laminated to at least one major surface of the insulation panel, for example and insulation assembly comprising the insulation panel sandwiched between two sheets of plasterboard. Such an assembly provides an advantageous combination of thermal and mechanical properties.

The insulation panel may have a reaction to fire of at least A2 according to the European Standard EN 13501-1. References to the aforementioned standards are to the versions in force at the priority date of the present application and those standards are hereby incorporated by reference.

Manufacture of an insulation panel may comprise one or more of the following steps:
- mixing of the mineral wool fibres and particles comprising calcium sulphate, preferably with a binder so as to form a primary blanket;
- formation of a secondary blanket by laying part of the primary blanket over itself;
- introduction of the blanket into a curing oven;
- curing of the blanket.

Forming the insulation panel from the primary blanket may comprise one or more of: folding the primary blanket over itself, notably using an oscillating pendulum; compressing the blanket, for example increasing its density by reducing its thickness; realigning fibres within the blanket, for example by folding, compressing or stretching; passing the blanket through a curing oven or drying oven, notably to cure a binder applied to the fibres.

The temperature in the curing oven may be ≥ 220 °C, ≥ 230 °C or ≥ 240 °C; residence time in the curing oven may be ≥ 2 minutes or ≥ 5 min and/or ≥ 20 minutes, ≥ 15 minutes or ≤ 10 minutes . It has been found surprising that the blanket demonstrates an advantageous combination of thermal and fire properties having passed through the curing oven; it would have been though that passage through a curing oven would adversely affect the properties of the particles.

According to further aspects, the present invention provides:
- a self-supporting insulation panel, notably in accordance with claim 1; and
- a method of manufacturing a self-supporting insulation panel, notably a self-supporting insulation panel in accordance with claim 1.
Manufacture of the self-supporting insulation panel may comprise mixing individual particles comprising calcium sulphate, notably particles consisting essentially calcium sulphate, with mineral wool fibres in an air stream. Subsequent to its manufacture, the self-supporting insulation panel may be:
- packaged and/or
- transported to its intended location of use (for example a building) or to a location at which it incorporated into another product (for example a location manufacturing doors which incorporate such insulation panels); and/or
- assembled in a building structure, for example by securing the insulation panel to or within a structure of building.
The term "self-supporting panel" as used herein thus indicates a panel which exits independently from a structure which is required to create the panel or which is required to maintain the integrity of the panel. Coating layers deposited on a support surface by spraying a stream comprising a wet mixture comprising mineral fibres towards the support surface and allowing the layer to form and dry upon the support surface are not "self-supporting panels".

The insulation panel is preferably free from, substantially free from or comprises less that 5% or less that 2% by weight of: cement and/or vermiculite and/or perlite and/or clay and/or cellulosic fibres.

An embodiment of the invention will now be described below, by way of example only, with reference to the accompanying drawings of which:

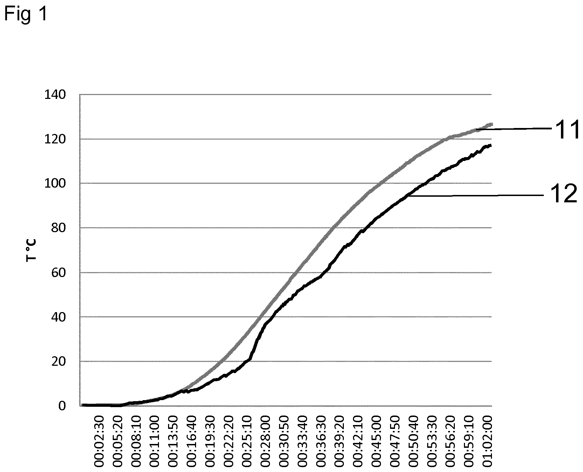

Fig 1 is a graph showing temperature performance.

Particles of calcium sulphate were obtained by milling plaster from fire resistance plasterboard waste. After milling, the particles had an average diameter of about 8mm. These particles were introduced into an air carried stream of rock mineral wool fibres in the collecting hood of a mineral wool manufacturing line. The particles were sprinkled into the collecting hood and allowed to fall in to the stream of binder coated stone wool fibres at a position between fiberisation of the rock wool fibres on spinning rotors using external (or cascade) spinning and collection of the mineral wool fibres on a collecting belt in the form of a mat. The mat containing the rock wool fibres, the binder and the particles in the form of a primary mat having a thickness of about 20 mm was folded over itself using a pendulum system to form a secondary mat having a thickness of about 150 mm and the secondary mat was compressed and passed through a curing oven to cure the binder. The residence time in the curing oven was about 5 minutes at a temperature of about 250 °C.

The cured secondary mat comprised about 22 wt% particles, 75 wt% rock wool fibres and 3 wt% binder as a homogeneous mixture.

The insulation panel was subjected to a simulated fire test and the temperature T in °C measured at the non-exposed face of the insulation panels as a function of time (in hours: minutes: seconds) is shown by line 12 in Fig 1. Line 11 shows the performance of an equivalent standard rock mineral wool insulation panel which did not comprise the calcium sulphate particles of the example above. As can be seem in Fig 1, the insulation panel of the example demonstrated a better performance, indicated by a lower temperature during the test. The test was carried out in accordance with EN 1363-1.

## Claims

1. An insulation panel comprising
- at least 40 wt%, notably at least 50 wt%, of mineral wool fibres; and
- a plurality of spaced, individual particles comprising calcium sulphate, notably particles consisting essentially of calcium sulphate;
**characterised in that** the particles are selected from: particles having an average geometrical diameter of at least 5mm distributed between the mineral wool fibres; and particles embedded on the mineral wool fibres.

2. The insulation panel of claim 1, wherein the particles have an average geometrical diameter of less than 15mm.

3. The insulation panel of any preceding claim, wherein the insulation panel has a density of at least 100kg/m³ and no more than 500 kg/m³.

4. The insulation panel of any preceding claim, wherein the mineral wool fibres comprise stone wool fibres.

5. The insulation panel of any preceding claim, wherein the particles are selected from milled plaster and waste plasterboard particles, notably fire resistant plasterboard.

6. The insulation panel of any preceding claim, wherein the particles make up less than 60% by weight of the weight of the insulation panel, notably between 10% and 50% by weight of the insulation panel.

7. The insulation panel of any preceding claim wherein the insulation panel comprises an organic binder, notably making up between 1% and 7% by weight of the insulation panel.

8. The insulation panel of any preceding claim, wherein the panel has a fire-resistant rating of at least A2 according to European Standard EN 13501-1.

9. The insulation panel of any preceding claim, wherein the insulation panel comprises a homogeneous mixture the mineral wool fibres and the particles comprising calcium sulphate.

10. An insulation assembly comprising an insulation panel according to any of claims 1 to 9 and a sheet of plasterboard laminated to a major surface of the insulation panel, notably a sheet of plasterboard laminated to each major surface of the insulation panel.

11. A method of manufacturing an insulation panel comprising at least 40% by weight mineral wool fibres comprising the step of:
- forming a blanket comprising mineral wool fibres and particles comprising calcium sulphate, notably particles consisting essentially of calcium sulphate, by: a) combining a powder form of the particles having an average geometrical diameter of at least 5mm with mineral wool fibres to form the blanket; or b) combining a slurry comprising calcium sulphate with the mineral wool fibres to form a blanket and subsequently forming the particles from the applied slurry; and
- forming the insulation panel from the blanket.

12. The method of claim 11, comprising:
applying an uncured, organic binder to the mineral wool fibres, notably prior to combining the power form of the particles or the slurry with the mineral wool fibres; and
- subsequent to combining the power form of the particles or the slurry with the mineral wool fibres, passing the blanket through a curing oven with a residence time of at least 5 minutes to cure the binder.

13. The method of claim 11 or claim 12, wherein the method comprises milling a material comprising calcium sulphate provided in a form selected from a board, pieces and particles, notably of plasterboard or fire resistant plasterboard, more notably in the form of waste or scrap, to provide the particles having an average geometrical diameter of at least 5mm.

14. The method of any of claims 11 to 13, wherein the insulation panel is an insulation panel in accordance with any of claims 1 to 9.
